# FASCICULE DE BREVET EUROPEEN

(11) **EP 3 880 540 B1**
(45) Date de publication et mention de la délivrance du brevet: **12.07.2023**
(21) Numéro de dépôt: 19818203.2
(22) Date de dépôt: 04.11.2019
(51) Int. Cl.: B62D 25/04

(54) **RENFORCEMENT MODULAIRE DE PIED AVANT**
MODULARE A-SÄULENVERSTÄRKUNG
MODULAR A-PILLAR REINFORCEMENT

(30) Priorité: 14.11.2018 FR 1871521
(43) Date de publication de la demande: 22.09.2021
(73) Titulaire: PSA Automobiles SA, 78300 Poissy (FR)
(72) Inventeur: RIVIERRE, Laurent, 75015 Paris (FR); SAINT DENIS, Lionel, 92290 CHATENAY MALABRY (FR); GALLERNE, Jean Christophe, 78114 MAGNY LES HAMEAUX (FR); REGHEM, Peter, 78140 VELIZY VILLACOUBLAY (FR); SENECAL, Josselin, 77176 SAVIGNY LE TEMPLE (FR)
(86) Numéro de dépôt international: PCT/FR2019/052601
(87) Numéro de publication internationale: WO 2020/099760

(56) Documents cités:
- EP-A1- 3 050 781
- DE-U1-202015 102 540
- US-A1- 2010 207 426
- US-A1- 2016 257 344

## Description

L'invention a trait au domaine des véhicules automobiles, plus particulièrement à la structure avant d'un véhicule automobile.

### Technique antérieure

La structure d'un véhicule automobile comprend, de chaque côté, un pied avant formant un corps creux, qui permet notamment de soutenir un toit et une porte avant. Ce pied avant peut comprendre, en outre, au moins un renfort apte à permettre le renforcement du pied avant, ceci afin de limiter les dégâts occasionnés à la structure en cas de choc frontal ou latéral.

Les documents de brevet publiés JP 2014-180891 et US 2016/257344 A1 divulguent un renfort de charnière disposé dans le pied avant du véhicule. Chaque renfort présente une section transversale en U et comprend notamment une surface de montage pour la charnière et deux portions latérales. Chaque renfort comprend, en outre, une extension supérieure formant un crochet, mais, étant spécifique d'un pied avant, il ne présente aucune modularité.

### Exposé de l'invention

L'invention a pour objectif de pallier au moins un des inconvénients de l'état de la technique susmentionné. Plus particulièrement, l'invention a pour objectif d'améliorer le renforcement du pied avant, quelle que soit la taille de sa section.

L'invention a pour objet un renfort de pied avant de véhicule automobile, destiné à être disposé dans un corps creux formé par ledit pied avant et remarquable en ce que ledit renfort comprend : un premier embouti avec deux parois parallèles et une paroi transversale reliant les deux parois parallèles à un bord de chacune desdites parois ; et un deuxième embouti reliant les deux parois parallèles, à distance de la paroi transversale.

Selon un mode avantageux de l'invention, chacune des deux parois parallèles du premier embouti comprend une patte de fixation à une paroi latérale du corps creux formé par le pied avant.

Selon un mode avantageux de l'invention, chacune des deux parois parallèles du premier embouti comprend au moins un renfoncement de rigidification et/ou un bord plié.

Selon un mode avantageux de l'invention, le deuxième embouti forme une paroi et, à deux bords opposés de ladite paroi, deux pattes de fixation aux deux parois parallèles du premier embouti.

Selon un mode avantageux de l'invention, le deuxième embouti forme à deux bords opposés de la paroi dudit embouti et distincts des bords avec les pattes de fixation, des portions pliées de rigidification.

L'invention a également pour objet un véhicule automobile comprenant : deux pieds avant formés, chacun, par un embouti de pied avant de section transversale en U et une doublure d'aile avant avec une section transversale en U opposée à la section transversale en U de l'embouti de pied avant, ledit embouti et ladite doublure étant assemblés mutuellement de manière à former un corps creux, et un renfort de pied avant logé dans le corps creux de chacun des deux pieds avant, remarquable en ce que chacun des renforts de pied avant est selon l'invention, les deux parois parallèles du premier embouti étant horizontales et la paroi transversale dudit embouti étant contre une face interne avant ou arrière du corps creux.

Selon un mode avantageux de l'invention, la paroi transversale du premier embouti est contre et fixée à une face interne de la doublure d'aile.

Selon un mode avantageux de l'invention, chacune des deux parois parallèles du premier embouti comprend une patte de fixation à une paroi latérale du corps creux formé par le pied avant, et les pattes de fixation sont contre et fixées à une face interne latérale du corps creux correspondant.

Avantageusement, le pied avant comprend, en outre, un renfort de pied avant supplémentaire. Ce renfort supplémentaire est avantageusement positionné au niveau de la charnière supérieure, et comprend cinq parois : les parois latérale, avant, arrière, supérieure et inférieure, avec des orifices pour la fixation de la charnière sur l'embouti de pied avant. Les parois avant et arrière sont en contact avec les faces interne avant et arrière du corps creux.

L'invention a également pour objet un procédé de dimensionnement de la structure de carrosserie d'un véhicule automobile, ladite structure comprenant : deux pieds avant formés, chacun, par un embouti de pied avant de section transversale en U et une doublure d'aile avant avec une section transversale en U opposée à la section transversale en U de l'embouti de pied avant, ledit embouti et ladite doublure étant assemblés mutuellement de manière à former un corps creux, et un renfort logé dans chacun desdits corps creux ; remarquable en ce que chacun des renforts est selon l'invention, et les mêmes renforts sont utilisés pour différents modèles de véhicule avec différentes géométries de pied avant, lesdits renforts étant fixés directement exclusivement sur la doublure d'aile et les deux parois parallèles du premier embouti de chacun desdits renforts étant à distance de l'embouti de pied avant dans au moins une des géométries.

L'invention a également pour objet un procédé de dimensionnement de la structure de carrosserie d'un véhicule automobile, ladite structure comprenant : deux pieds avant formés, chacun, par un embouti de pied avant de section transversale en U et une doublure d'aile avant avec une section transversale en U opposée à la section transversale en U de l'embouti de pied avant, ledit embouti et ladite doublure étant assemblés mutuellement de manière à former un corps creux, et un renfort logé dans chacun desdits corps creux ; remarquable en ce que chacun des renforts est selon l'invention, le deuxième embouti étant commun à un même modèle de véhicule avec une géométrie du pied avant, le premier embouti étant spécifique à une configuration à propulsion thermique et une configuration à propulsion électrique dudit modèle.

Avantageusement, les renforts de pied avant adaptés pour un véhicule à propulsion électrique présentent, chacun, une patte d'indexation apte à permettre leur différentiation avec les renforts de pied avant adaptés pour un véhicule à propulsion thermique.

Les mesures de l'invention sont intéressantes en ce qu'elles permettent une modularité des renforts de pied avant. Deux modes de réalisation de l'invention existent pour chacun des renforts, adaptés soit aux véhicules à propulsion thermique soit aux véhicules à propulsion électrique. De plus, selon les modèles de véhicule, une différence dans l'épaisseur du pied avant est possible. Les renforts de pied avant selon l'invention s'adaptent à plusieurs configurations de pied avant, dans une plage de tolérance donnée. Cela permet d'éviter de modifier le renfort selon le modèle de véhicule choisi, donc de diminuer les coûts de production des renforts. L'installation est identique quel que soit le modèle ou le type de propulsion choisi, le temps de montage en est ainsi diminué. De plus, le nombre de points de soudure nécessaire à la fixation des renforts dans le pied avant est quasiment identique entre un véhicule thermique et un véhicule électrique. D'ordinaire, l'ajout de renforts supplémentaires est nécessaire dans un véhicule à configuration électrique, du fait de la masse supplémentaire des batteries de traction. Dans le cas présent, le renforcement ajoute très peu de masse, du fait notamment de la ressemblance dans la configuration de chacun des renforts.

D'autres caractéristiques et avantages de la présente invention seront mieux compris à l'aide de la description et des dessins.

### Brève description des dessins

[Fig 1] est une vue en perspective d'un véhicule automobile selon l'invention ;
[Fig 2] représente une vue de l'embouti de pied avant avec les deux renforts de pied avant selon un premier mode de réalisation de l'invention ;
[Fig 3] représente le renfort inférieur de la figure 2, fixé à la doublure d'aile avant ;
[Fig 4] représente le renfort inférieur des figures 2 et 3 ;
[Fig 5] représente une vue en coupe transversale du renfort inférieur des figures 2, 3 et 4, vue vers le bas, avec deux géométries de pied avant différentes ;
[Fig 6] représente une vue en coupe transversale telle que représentée à la figure 5, mais vue vers le haut, avec deux géométries de pied avant différentes ;
[Fig 7] représente un renfort de pied avant supérieur, tel que représenté à la figure 2 ;
[Fig 8] représente une vue de l'embouti de pied avant avec deux renforts de pied avant selon un second mode de réalisation de l'invention ;
[Fig 9] représente le renfort inférieur de la figure 8 ;
[Fig 10] représente le renfort supérieur de la figure 8.

### Description détaillée

Il existe un grand nombre de modèles de véhicules automobile, pouvant, chacun, présenter une configuration à propulsion thermique ou à propulsion électrique. Ainsi, selon les modèles, des différences de géométrie du pied avant peuvent être retrouvées. Des variations de rigidité sont également apparentes entre des véhicules électriques et des véhicules thermiques du même modèle. En effet, les véhicules électriques sont plus lourds, et nécessitent généralement plus de renforcements afin de mieux résister aux chocs.

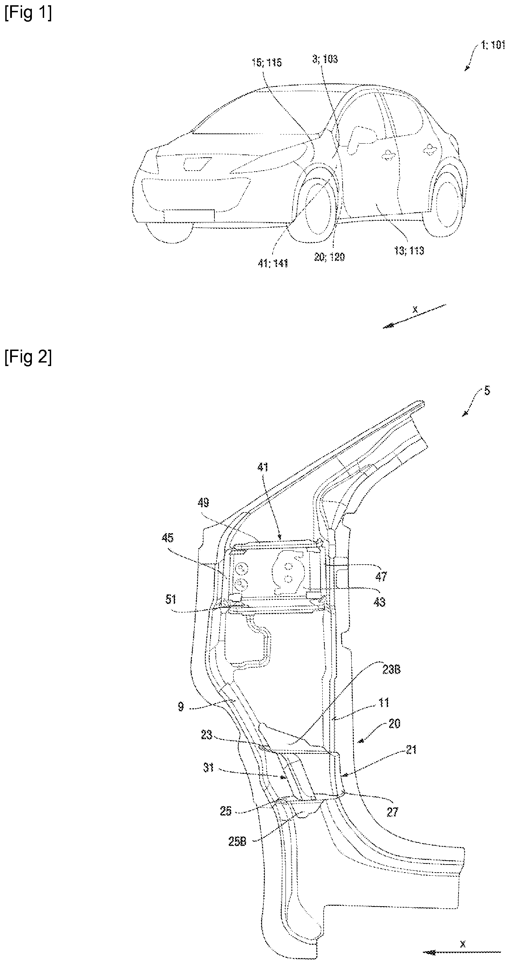

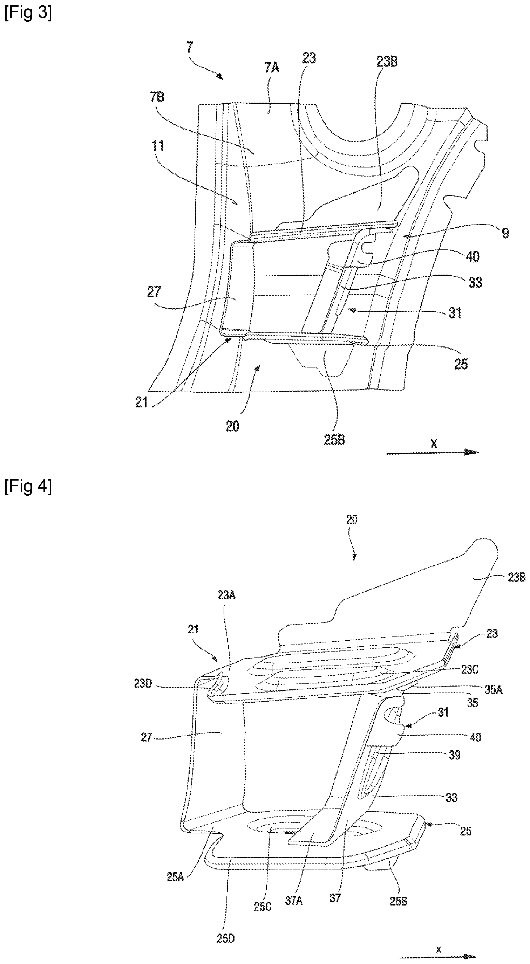

La figure 1 montre une vue en perspective d'un véhicule automobile selon l'invention. Ce véhicule (1 ; 101) peut présenter les caractéristiques d'un véhicule thermique 1 selon un premier mode de réalisation de l'invention, ou les caractéristiques d'un véhicule électrique 101 selon un deuxième mode de réalisation de l'invention. La structure de carrosserie du véhicule (1 ; 101) comprend, de chaque côté du véhicule (1 ; 101), un pied avant (3 ; 103), une aile avant (15 ; 115) positionnée à l'avant du pied avant (3 ; 103) et une porte avant (13 ; 113). Le pied avant (3 ; 103) forme un corps creux, constitué par un embouti de pied avant (visible à la figure 2) de section transversale en U et une doublure d'aile avant (visible à la figure 3) avec une section transversale en U opposée à la section transversale de l'embouti de pied avant. L'embouti de pied avant et la doublure d'aile avant sont assemblés mutuellement dans leurs extrémités avant et arrière pour former le corps creux. Le corps creux du pied avant (3 ; 103) présente deux renforts (20, 41 ; 120, 141) de pied avant (3 ; 103), un renfort inférieur (20 ; 120) et un renfort supérieur (41 ; 141) supplémentaire. L'axe de direction x représenté sur ces figures désigne le sens de déplacement du véhicule (1 ; 101).

Les figures 2 et 3 sont des schémas reproduisant, respectivement, l'embouti de pied avant ou la doublure d'aile avant avec les renforts selon le premier mode de réalisation de l'invention. Le renfort inférieur 20 de pied avant comprend un premier embouti 21 et un deuxième embouti 31. Le premier embouti 21 est constitué par deux parois parallèles supérieure 23 et inférieure 25, et une paroi transversale 27. La paroi transversale 27 relie les deux parois supérieure 23 et inférieure 25 ensemble. La paroi transversale 27 est préférentiellement positionnée vers une face interne arrière 11 du corps creux du pied avant. Les parois supérieure 23 et inférieure 25 comprennent, respectivement, une patte de fixation supérieure 23B et inférieure 25B, cette fixation étant réalisée à une paroi latérale 7A de la doublure d'aile avant 7, et plus préférentiellement à une face interne latérale 7B de ladite doublure 7. Cette fixation est préférentiellement réalisée par soudage, et plus préférentiellement par des points de soudure électrique. Le deuxième embouti 31 relie les parois supérieure 23 et inférieure 25, à distance de la paroi transversale 27. Le deuxième embouti 31 et les parois supérieure 23 et inférieure 25 horizontales sont avantageusement positionnés en contact avec une face interne avant 9 du corps creux. Le deuxième embouti 31 comprend une paroi 33 qui s'étend longitudinalement dans le pied avant, entre les parois supérieure 23 et inférieure 25 du premier embouti 21. Cette paroi 33 comprend une patte latérale 40 qui s'étend vers l'avant du premier embouti 21.

Le renfort de pied avant supplémentaire 41 comprend une paroi latérale 43 en contact avec l'embouti 5 de pied avant, ainsi que des parois avant 45, arrière 47, supérieure 49 et inférieure 51. Les parois avant 45 et arrière 47 sont respectivement en contact avec les faces interne avant 9 et arrière 11 du corps creux formant le pied avant. La fixation du renfort de pied avant supplémentaire 41 est préférentiellement réalisée par soudage, et plus préférentiellement par des points de soudure électrique. Ce renfort supplémentaire 41 est un renfort de charnière de porte avant.

La figure 4 est une vue agrandie du renfort inférieur montré aux figures 2 et 3. Le premier embouti 21 comprend les parois supérieure 23 et inférieure 25, reliées à la paroi transversale 27 par des bords supérieur 23A et inférieur 25A, respectivement. Chacune des parois supérieure 23 et inférieure 25 comprend, en plus des pattes de fixation (23B, 25B), des renforcements de rigidification (23C, 25C), au nombre de deux pour la paroi supérieure 23 et un pour la paroi inférieure 25. Les parois supérieure 23 et inférieure 25 comprennent, en outre, un bord plié (23D, 25D). Le deuxième embouti 31 a une forme de S, avec la paroi 33 et deux bords supérieur 35 et inférieur 37, prolongés respectivement par des pattes de fixation supérieure 35A et inférieure 37A. La paroi 33 comprend, en outre, un renforcement de rigidification médian 39. Les pattes de fixation (35A, 37A) servent à la fixation du deuxième embouti 31 aux parois supérieure 23 et inférieure 25 du premier embouti 21. Le deuxième embouti 31 comprend, en outre, des portions pliées de rigidification, distinctes des bords (35, 37) et des pattes de fixation (35A, 37A).

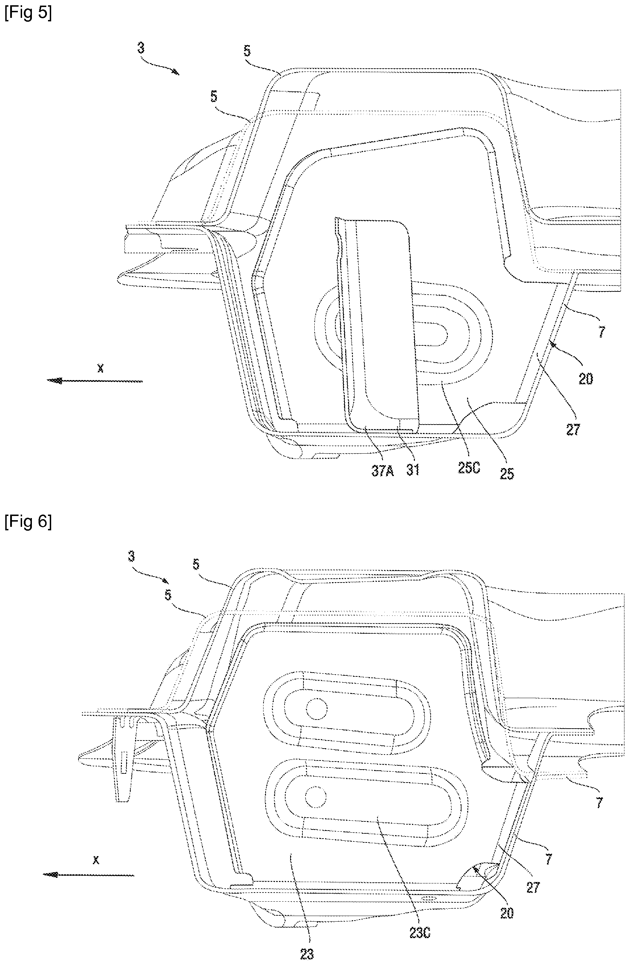

Les figures 5 et 6 montrent des sections au niveau du renfort inférieur de pied avant, avec deux géométries distinctes de pied avant. La figure 5 est une vue vers le bas, et la figure 6 est une vue vers le haut. Sur ces figures, on peut voir que les parois supérieure 23 et inférieure 25 du renfort inférieur 20 de pied avant 3 sont adaptées à la configuration de pied avant 3 la plus serrée, où l'embouti de pied avant 5 est représenté en pointillés. Ainsi, ce renfort 20 peut également s'adapter à toutes les géométries de pied avant 3 de taille supérieure. Dans les géométries de pied avant 3 de taille supérieure, le renfort 20 est directement et exclusivement positionné contre la doublure d'aile 7, les deux parois supérieure 23 et inférieure 25 du premier embouti étant à distance de l'embouti de pied avant 5 correspondant (représenté en traits pleins). De la même façon, l'épaisseur de la paroi transversale 27 est adaptée à la configuration de doublure d'aile 7 la plus serrée (particulièrement visible à la figure 6, la configuration la plus serrée étant représentée en pointillés).

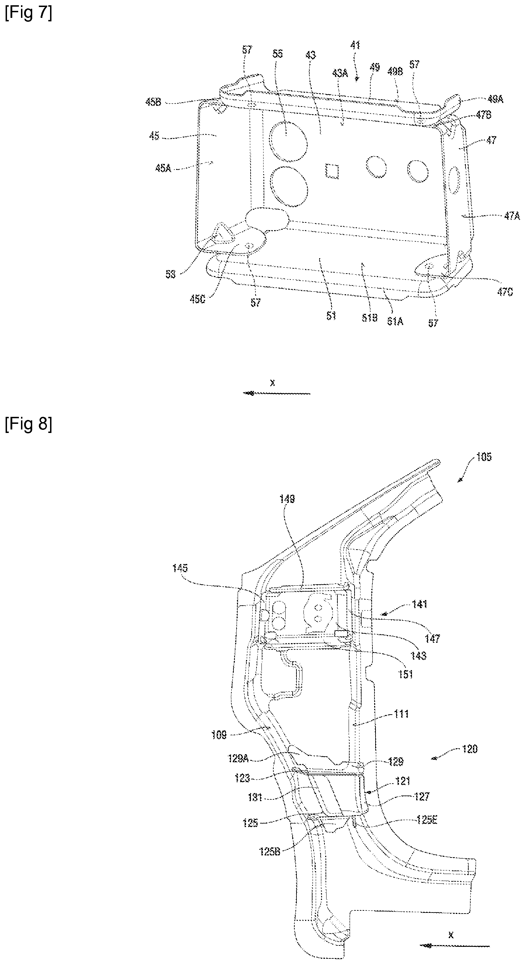

La figure 7 montre le renfort de pied avant supplémentaire tel que représenté à la figure 2. La paroi latérale 43 du renfort supplémentaire 41 présente une face d'accostage latérale 43A, en contact avec l'embouti de pied avant sous-jacent (visible à la figure 2). Les parois avant 45 et arrière 47 présentent, chacune, une face d'accostage avant 45A et arrière 47A, ces faces (45A, 47A) étant aptes à entrer en contact avec les faces interne avant et arrière, visibles à la figure 2, de l'embouti de pied avant. Les parois (45, 47) présentent, en outre, une extension supérieure (45B, 47B) et une extension inférieure (45C, 47C), qui permettent, respectivement, la fixation desdites parois (45, 47) à des faces inférieure 49B et supérieure 51B des parois supérieure 49 et inférieure 51. Cette fixation est préférentiellement réalisée par des points de soudure 57. Les parois supérieure 49 et inférieure 51 comprennent, chacune, un bord latéral (49A, 51A). Les parois latérale 43 et arrière 47 comprennent en outre des orifices 55, aptes à permettre la fixation de la charnière correspondante sur l'embouti de pied avant sous-jacent (visible à la figure 2). Le renfort supplémentaire 41 comprend également des nervures de raidissement 53 améliorant la rigidité du renfort 41, notamment lors d'un choc frontal, ces nervures 53 étant positionnées entre les parois supérieure 49, et inférieure 51, et chacune des extensions (45B, 45C, 47B, 47C) des parois avant 45 et arrière 47.

Les figures 8 à 10 présentent les renforts de pied avant selon un deuxième mode de réalisation de l'invention, dans une configuration de véhicule électrique. Ces figures reprennent la numérotation des figures précédentes pour les éléments identiques ou similaires, la numération étant toutefois incrémentée de 100. Il est par ailleurs fait référence à la description de ces éléments en relation avec le premier mode de réalisation de l'invention.

Le renfort inférieur de pied avant 120 comprend un premier embouti 121, avec des parois supérieure 123, transversale 127 et inférieure 125. Sur la paroi supérieure 123 est positionnée une portion additionnelle supérieure 129. Cette portion additionnelle supérieure 129 permet d'améliorer la rigidification du renfort 120 dans un véhicule électrique, elle comprend la patte de fixation supérieure 129A à la doublure d'aile sous-jacente (non visible sur les figures 8 à 10). Un renforcement de rigidification 129B en forme de croix est également positionné sur la face de la portion additionnelle supérieure 129 en contact avec la portion supérieure 123. Cette portion additionnelle supérieure 129 comprend en outre des orifices 129C pour la fixation du renfort 120. La paroi inférieure 125 comprend une patte d'indexation 125E, positionnée du côté de la paroi transversale 127, cette patte 125E étant apte à faciliter la reconnaissance de renfort 120.

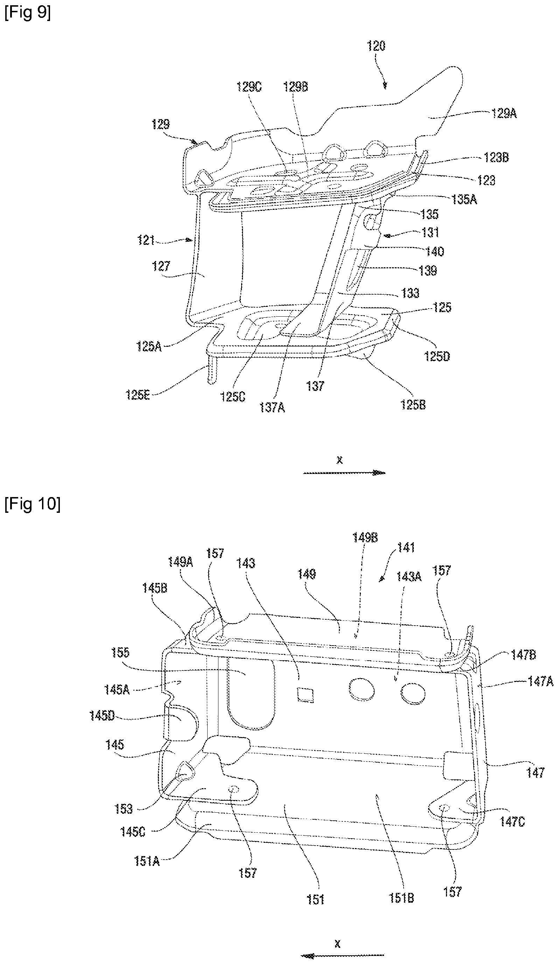

Le renfort supplémentaire 141 de pied avant est un embouti plus épais que l'embouti réalisé pour le renforcement des véhicules thermiques. Ce renfort 141 présente en outre une patte d'indexation 145D, dans le prolongement de la paroi avant 145 et orienté vers l'intérieure de l'embouti 141, cette patte d'indexation 145B étant apte à faciliter la reconnaissance dudit embouti 141. D'autres légères différences sont retrouvées sur cet embouti 141, telles que les formes des extensions (145B, 145C, 147B, 147C), non décrites mais visibles à la figure 10, qui permettent notamment de faciliter sa fabrication.

## Revendications

1. Renfort (20 ; 120) de pied avant (3 ; 103) de véhicule automobile (1 ; 101), destiné à être disposé dans un corps creux formé par ledit pied avant (3 ; 103), comprenant :
- un premier embouti (21 ; 121) avec deux parois parallèles (23, 25 ; 123, 125) et une paroi transversale (27 ; 127) reliant les deux parois parallèles (23, 25 ; 123, 125) à un bord (23A, 25A ; 125A) de chacune desdites parois (23, 25 ; 123, 125) ; et
- un deuxième embouti (31 ; 131) reliant les deux parois parallèles (23, 25 ; 123, 125), à distance de la paroi transversale (27 ; 127), le deuxième embouti (31 ; 131) formant une paroi (33 ; 133) et, à deux bords (35, 37 ; 135, 137) opposés de ladite paroi (33 ; 133), deux pattes de fixation (35A, 37A ; 135A, 137A) aux deux parois parallèles (23, 25 ; 123, 125) du premier embouti (21 ; 121, **caractérisé en ce que** le deuxième embouti (31 ; 131) forme à deux bords opposés (35, 37 ; 135, 137) de la paroi (33 ; 133) dudit embouti (31 ; 131) et distincts des bords (35, 37 ; 135, 137) avec les pattes de fixation (35A, 37A ; 135A, 137A), des portions pliées de rigidification.

2. Renfort (20 ; 120) selon la revendication 1, **caractérisé en ce que** chacune des deux parois parallèles (23, 25 ; 123, 125) du premier embouti (21 ; 121) comprend une patte de fixation (23B, 25B ; 129A, 125B) à une paroi latérale (7A) du corps creux formé par le pied avant (3 ; 103).

3. Renfort (20 ; 120) selon l'une des revendications 1 et 2, **caractérisé en ce que** chacune des deux parois parallèles (23, 25 ; 123, 125) du premier embouti (21 ; 121) comprend au moins un renfoncement de rigidification (23C, 25C ; 129B, 125C) et/ou un bord plié (23D, 25D ; 123B, 125D).

4. Véhicule automobile (1 ; 101) comprenant :
- deux pieds avant (3 ; 103) formés, chacun, par un embouti (5 ; 105) de pied avant (3 ; 103) de section transversale en U et une doublure d'aile avant (7 ; 107) avec une section transversale en U opposée à la section transversale en U de l'embouti (5 ; 105) de pied avant (3 ;103), ledit embouti (5 ; 105) et ladite doublure (7 ; 107) étant assemblés mutuellement de manière à former un corps creux, et
- un renfort (20 ; 120) de pied avant (3 ; 103) logé dans le corps creux de chacun des deux pieds avant (3 ; 103),
**caractérisé en ce que** chacun des renforts (20 ; 120) de pied avant (3 ; 103) est selon l'une des revendications 1 à 3, les deux parois parallèles (23, 25 ; 123, 125) du premier embouti (21 ; 121) étant horizontales et la paroi transversale (27 ; 127) dudit embouti (21 ; 121) étant contre une face interne avant (9 ; 109) ou arrière (11 ; 111) du corps creux.

5. Véhicule automobile (1 ; 101) selon la revendication 4, **caractérisé en ce que** la paroi transversale (27 ; 127) du premier embouti (21 ; 121) est contre et fixé à une face interne (7B) de la doublure d'aile (7 ; 107).

6. Véhicule automobile (1 ; 101) selon l'une des revendications 4 et 5, **caractérisé en ce que** chacun des renforts (20 ; 120) est selon la revendication 2 et les pattes de fixation (23B, 25B ; 129A, 125B) sont contre et fixées à une face interne latérale (7B) du corps creux correspondant.

7. Procédé de dimensionnement de la structure de carrosserie d'un véhicule automobile (1), ladite structure comprenant :
- deux pieds avant (3) formés, chacun, par un embouti (5) de pied avant (3) de section transversale en U et une doublure d'aile avant (7) avec une section transversale en U opposée à la section transversale en U de l'embouti (5) de pied avant (3), ledit embouti (5) et ladite doublure (7) étant assemblés mutuellement de manière à former un corps creux, et un renfort (20) logé dans chacun desdits corps creux ;
**caractérisé en ce que** chacun des renforts (20) est selon l'une des revendications 1 à 3, et les mêmes renforts (20) sont utilisés pour différents modèles de véhicule (1) avec différentes géométries de pied avant (3), lesdits renforts (20) étant fixés directement exclusivement sur la doublure d'aile (7) et les deux parois parallèles (23, 25) du premier embouti (21) de chacun desdits renforts (20) étant à distance de l'embouti (5) de pied avant (3) dans au moins une des géométries, ou le deuxième embouti (31 ; 131) est commun à un même modèle de véhicule (1 ; 101) avec une géométrie du pied avant (3 ; 103), le premier embouti (21 ; 121) étant spécifique à une configuration à propulsion thermique et une configuration à propulsion électrique dudit modèle.

## Patentansprüche

1. Verstärkung (20; 120) des vorderen Fußes (3; 103) eines Kraftfahrzeugs (1; 101), die dazu bestimmt ist, in einem hohlen Körper angeordnet zu werden, der von dem vorderen Fuß (3; 103) gebildet wird, umfassend:
- ein erstes Formstück (21; 121) mit zwei parallelen Wänden (23, 25; 123, 125) und einer Querwand (27; 127), die die beiden parallelen Wände (23, 25; 123, 125) mit einem Rand (23A, 25A; 125A) jeder der Wände (23, 25; 123, 125) verbindet; und
- ein zweites Prägestück (31; 131), das die beiden parallelen Wände (23, 25; 123, 125) im Abstand von der Querwand (27; 127) verbindet, wobei das zweite Prägestück (31; 131) eine Wand (33; 133) bildet und an zwei gegenüberliegenden Rändern (35, 37; 135, 137) der Wand (33; 133) zwei Befestigungslaschen (35A, 37B A; 135A, 137A) an den beiden parallelen Wänden (23, 25; 123, 125) des ersten Prägestempels (21; 121), **dadurch gekennzeichnet, dass** das zweite Prägestempel (31; 131) an zwei gegenüberliegenden Rändern (35, 37; 135, 137) der Wand (33; 133) des Prägestempels (31; 131) und getrennt von den Rändern (35, 3; 13) ausgebildet ist 5, 137) mit den Befestigungslaschen (35A, 37A; 135A, 137A) gebogene Versteifungsabschnitte.

2. Verstärkung (20; 120) nach Anspruch 1, **dadurch gekennzeichnet, dass** jede der zwei parallelen Wände (23, 25; 123, 125) des ersten Stutzens (21; 121) eine Befestigungslasche (23B, 25B; 129A, 125B) an einer Seitenwand (7A) des Hohlkörpers aufweist, der durch den vorderen Fuß (3; 103) gebildet ist.

3. Verstärkung (20; 120) nach einem der Ansprüche 1 und 2, **dadurch gekennzeichnet, dass** jede der beiden parallelen Wände (23, 25; 123, 125) des ersten Prägestempels (21; 121) mindestens eine Versteifungsvertiefung (23C, 25C; 129B, 125C) und/oder einen gefalteten Rand (23D, 25D; 123B, 125D) aufweist.

4. Kraftfahrzeug (1; 101) mit:
- zwei Vorderfüße (3; 103), die jeweils aus einem vorderen Fußstempel (5; 105) mit U-förmigem Querschnitt und einer Vorderflügelauskleidung (7; 107) mit einem U-förmigen Querschnitt, der dem U-förmigen Querschnitt des vorderen Fußstempels (5; 105) mit 3; 103 gegenüberliegt, gebildet sind, wobei das Stempel (5; 105) und die Auskleidung (7; 107) zu einem Hohlkörper miteinander verbunden sind, und
- eine Verstärkung (20; 120) des vorderen Fußes (3; 103), die in dem Hohlkörper jedes der beiden vorderen Fußes (3; 103) untergebracht ist,
**dadurch gekennzeichnet, dass** jede Verstärkung (20; 120) des vorderen Fußes (3; 103) nach einem der Ansprüche 1 bis 3 ist, wobei die beiden parallelen Wände (23, 25; 123, 125) des ersten Ansatzes (21; 121) horizontal sind und die Querwand (27; 127) des Ansatzes (21; 121) gegen eine vordere (9; 109) oder hintere (11; 111) Innenseite des Hohlkörpers gerichtet ist.

5. Kraftfahrzeug (1; 101) nach Anspruch 4, **dadurch gekennzeichnet, dass** die Querwand (27; 127) des ersten Ansatzes (21; 121) an einer Innenfläche (7B) des Flügelfutters (7; 107) anliegt und befestigt ist.

6. Kraftfahrzeug (1; 101) nach einem der Ansprüche 4 und 5, **dadurch gekennzeichnet, dass** jede der Verstärkungen (20; 120) nach Anspruch 2 ist und die Befestigungslaschen (23B, 25B; 129A, 125B) an einer seitlichen Innenfläche (7B) des entsprechenden Hohlkörpers anliegen und befestigt sind.

7. Verfahren zur Dimensionierung der Karosseriestruktur eines Kraftfahrzeugs (1), wobei die Struktur umfasst:
- zwei Vorderfüße (3), die jeweils durch ein vorderes Fußstempel (5) (3) mit U-förmigem Querschnitt und ein vorderes Flügelfutter (7) mit einem U-förmigen Querschnitt gegenüber dem U-förmigen Querschnitt des vorderen Fußstempels (5) (3) gebildet sind, wobei das Fußstempel (5) und das Futter (7) zu einem Hohlkörper miteinander verbunden sind und eine Verstärkung (20) in jedem der Hohlkörper aufgenommen ist;
**dadurch gekennzeichnet, dass** jede der Verstärkungen (20) nach einem der Ansprüche 1 bis 3 ist und die gleichen Verstärkungen (20) für verschiedene Fahrzeugmodelle (1) mit unterschiedlichen vorderen Fußgeometrien (3) verwendet werden, wobei die Verstärkungen (20) direkt ausschließlich an der Flügelauskleidung (7) befestigt sind und die beiden parallelen Wände (23, 25) des ersten Einstanzes (21) jeder der Verstärkungen (20) in einem Abstand von dem Einstanzer (5) des vorderen Fußes (3) in mindestens einer der Geometrien oder dem zweiten Einstanzer (3Exzenter sind 1; 131) einem gleichen Fahrzeugmodell (1; 101) mit einer Vorderfußgeometrie (3; 103) gemeinsam ist, wobei das erste Prägestempel (21; 121) spezifisch für eine thermisch angetriebene und eine elektrisch angetriebene Konfiguration dieses Modells ist.

## Claims

1. Reinforcement (20; 120) of the front foot (3; 103) of a motor vehicle (1; 101), intended to be arranged in a hollow body formed by said front foot (3; 103), comprising:
- a first stamped portion (21; 121) with two parallel walls (23, 25; 123, 125) and a transverse wall (27; 127) connecting the two parallel walls (23, 25; 123, 125) to an edge (23A, 25A; 125A) of each of said walls (23, 25; 123, 125); and
- a second stamped portion (31; 131) connecting the two parallel walls (23, 25; 123, 125), at a distance from the transverse wall (27; 127), the second stamped portion (31; 131) form ing a wall (33; 133) and, at two opposite edges (35, 37; 135, 137) of said wall (33; 133), two fixing lugs (35A, 37A; 135A, 137A) to the two parallel walls (23, 25; 123, 125) of the first stamped portion (21; 121), **characterized in that** the second stamped portion (31; 131) forms at two opposite edges (35, 37; 135, 137) of the wall (33; 133) of said stamped portion (31; 131) and distinct from the edges (35, 37; 15, 37) with the fixing lugs (35 A, 37 A; 135 A, 137 A), folded stiffening portions.

2. Reinforcement (20; 120) according to claim 1, **characterized in that** each of the two parallel walls (23, 25; 123, 125) of the first stamped portion (21; 121) comprises a fixing lug (23B, 25B; 129A, 125B) to a side wall (7A) of the hollow body formed by the front foot (3; 103).

3. Reinforcement (20; 120) according to either of claims 1 and 2, **characterized in that** each of the two parallel walls (23, 25; 123, 125) of the first stamped portion (21; 121) comprises at least one stiffening recess (23C, 25C; 129B, 125C) and/or a folded edge (23D, 25D; 123B, 125D).

4. Motor vehicle (1; 101) comprising:
- two front legs (3; 103) each formed by a press (5; 105) of the front leg (3; 103) of U-shaped cross-section and a front wing lining (7; 107) with a U-shaped cross-section opposite the U-shaped cross-section of the press (5; 105) of the front leg (3; 103), said press (5; 105) and said lining (7; 107) being mutually assembled so as to form a hollow body, and
- a reinforcement (20; 120) of the front foot (3; 103) housed in the hollow body of each of the two front feet (3; 103),
**characterized in that** each of the reinforcements (20; 120) of the front foot (3; 103) is according to one of claims 1 to 3, the two parallel walls (23, 25; 123, 125) of the first stamped portion (21; 121) being horizontal and the transverse wall (27; 127) of said stamped portion (21; 121) being against a front (9; 109) or rear (11; 111) inner face of the hollow body.

5. Motor vehicle (1; 101) according to claim 4, **characterized in that** the transverse wall (27; 127) of the first stamped portion (21; 121) is against and fixed to an internal face (7B) of the wing lining (7; 107).

6. Motor vehicle (1; 101) according to one of claims 4 and 5, **characterized in that** each of the reinforcements (20; 120) is according to Claim 2 and the fixing lugs (23B, 25B; 129A, 125B) are against and fixed to a lateral internal face (7B) of the corresponding hollow body.

7. Method for dimensioning the body structure of a motor vehicle (1), said structure comprising:
- two front legs (3) each formed by a front leg press (5) (3) of U-shaped cross-section and a front wing lining (7) with a U-shaped cross-section opposite the U-shaped cross-section of the front leg press (5) (3), said press (5) and said lining (7) being mutually assembled so as to form a hollow body, and a reinforcement (20) housed in each of said hollow bodies;
**characterized in that** each of the reinforcements (20) is according to one of claims 1 to 3, and the same reinforcements (20) are used for different vehicle models (1) with different front foot geometries (3), said reinforcements (20) being fixed directly exclusively to the wing lining (7) and the two parallel walls (23, 25) of the first stamped portion (21) of each of said reinforcements (20) being at a distance from the front foot stamped portion (5) (3) in at least one of the geometries, or the second stamped portion (31; 31) is common to a same vehicle model (1; 101) with a geometry of the front foot (3; 103), the first stamped part (21; 121) being specific to a thermal propulsion configuration and an electric propulsion configuration of said model.
